# EUROPÄISCHE PATENTSCHRIFT

(11) **EP 0 342 352 B1**
(45) Veröffentlichungstag und Bekanntmachung des Hinweises auf die Patenterteilung: **26.05.1993**
(21) Anmeldenummer: 89106266.3
(22) Anmeldetag: 08.04.1989
(51) Int. Cl.: B29C 67/22

(54) **Verfahren zum Herstellen von Schaumstoffpolstern**
Method of making foam upholstery
Procédé pour fabriquer des coussins de rembourrage en mousse

(30) Priorität: 22.04.1988 DE 3813587
(43) Veröffentlichungstag der Anmeldung: 23.11.1989
(73) Patentinhaber: BAYER AG, 51368 Leverkusen (DE)
(72) Erfinder: Brock, Martin, Dr., D-5000 Köln 80 (DE); Pohlig, Ralf, Dipl.-Ing., D-5090 Leverkussen 3 (DE)

(56) Entgegenhaltungen:
- DE-A- 2 035 489
- DE-A- 2 052 907
- DERWENT PUBLICATIONS LTD AN - 78-03504A , DW7802 && JP-A-52 049 025 (MITSUBOSHI BELTING KK)
- PATENT ABSTRACTS OF JAPAN vol. 8, no. 50 (M-281)7. März 1984 & JP-A-58 203 027 (Y. SHINJI ) 26. November 1983

## Beschreibung

Die Erfindung betrifft ein Verfahren zum Herstellen von Schaumstoffpolstern, insbesondere Polyurethanschaumstoffpolstern, mit Zonen unterschiedlicher Härte durch Formverschäumung, indem mindestens zwei Schaumstoffe unterschiedlicher Härte bildende, fließfähige Reaktionsgemische nacheinander in den Formhohlraum eingebracht werden, wobei das zweite Reaktionsgemisch beim Einbringen bereits angecremt ist, und das Schaumstoffpolster nach dem Aushärten entformt wird.

Die Herstellung von Schaumstoffpolstern mit Zonen unterschiedlicher Härte durch Formverschäumung ist in vielen Varianten bekannt (US-PS 4 190 697, EP-PS 68 820, US-PS 4 379 856 entsprechend EP-PS 56 939).

Allen diesen Verfahren ist gemeinsam, daß die exakte Lage und Ausdehnung der Zonen unterschiedlicher Härte schlecht reproduzierbar ist. Sie sind deshalb für die Serienfertigung, insbesondere in der Automobilindustrie, problematisch. Dadurch können die gewünschten Eigenschaften, wie beispielsweise Seitenführungskräfte bei Polstersitzen, nicht zum Tragen kommen.

Es besteht die Aufgabe, das Verfahren der eingangs genannten Art hinsichtlich der Reproduzierbarkeit der exakten Lage und Ausdehnung der einzelnen Zonen im fertigen Polster zu verbessern.

Gelöst wird diese Aufgabe dadurch, daß vor dem Einbringen der Reaktionsgemische über einen vertieften Abschnitt des Formhohlraumes ein mit Löchern versehenes Flächengebilde gespannt wird und auf dieses Flächengebilde das erste Reaktionsgemisch in einem noch so dünnflüssigen Zustand aufgegeben wird, daß es durch die Löcher hindurch in den darunter befindlichen Raum fließt und dort aufschäumt, und daß das zweite Reaktionsgemisch in einem so weit angecremten Zustand in den oberhalb und seitlich des Flächengebildes verbleibenden Formhohlraum eingebracht wird, daß es durch die Löcher des Flächengebildes nicht mehr hindurchtritt.

Dadurch wird erreicht, daß die Zonen unterschiedlicher Härte eine exakte Abgrenzung aufweisen. An sich ist es zwar bekannt (DE-OS 2 052 907), bei der Herstellung von Polstern mit Zonen unterschiedlicher Härte in den Formhohlraum eines Formwerkzeuges Gewebe einzusetzen. Solche Einsätze werden aber vertikal oder leicht geneigt angeordnet, damit gleichzeitig und beidseitig eines solchen Einsatzes die unterschiedlichen Reaktionsgemische eingebracht werden können, so daß ein Eindringen der Reaktionsgemische bzw. des sich bildenden Schaumstoffes von beiden Seiten erfolgen kann. Eine Perforation, welche ein Hindurchfließen eines dünnflüssigen Reaktionsgemisches erlaubt, ist bei diesen porösen Folien nicht vorgesehen.

Als Material für die besagten Flächengebilde eignet sich eine dünne, gelochte Kunststoff-Folie, deren Oberfläche vorzugsweise aufgerauht ist, um eine bessere Haftung zu vermitteln, ein Zuschnitt aus großmaschigem Gewebe oder Gestrick oder entsprechend gelochtem Faservlies. Zweckmäßigerweise sollten die Löcher runde oder zumindest ovale Form aufweisen, damit keine Kerbwirkungen auftreten. Dem Prinzip nach eignen sich aber auch eckige Löcher oder sogar Schlitze. Die Befestigung des Flächengebildes im Formhohlraum kann auf verschiedenste Weise erfolgen. Die Ränder des Flächengebildes lassen sich beispielsweise mit Haftklebestreifen versehen und damit am Boden bzw. an der Wandung des Formhohlraumes fixieren. Eine andere Möglichkeit besteht darin, am Boden und/oder der Wandung des Formhohlraumes dünne Nadeln vorzusehen. Auch durch Niederhalter läßt sich das Flächengebilde fixieren. Allerdings ist es zweckmäßig, darauf zu achten, daß die Niederhalter nicht vom Reaktionsgemisch benetzt werden, d.h. sie müssen zurückgezogen werden, bevor das zweite Reaktionsgemisch aufgegeben wird. Es ist nicht in jedem Falle erforderlich, das zweite Reaktionsgemisch auf das Flächengebilde direkt aufzutragen. Sofern der Formhohlraum beispielsweise Vertiefungen für Seitenwangen eines Polsters aufweist, läßt sich das zweite Reaktionsgemisch direkt in diese Vertiefungen eintragen und kann sich beim Aufschäumen auch über dem Mittelteil ausbreiten. Selbstverständlich ist es aber möglich, das zweite Reaktionsgemisch nur auf das Flächengebilde aufzubringen oder auch auf dieses sowie auf die davon nicht abgedeckten Abschnitte beim Auftragen zu verteilen.

Die Wahl der Lochgröße und die Anzahl der Löcher pro Flächeneinheit hängt von verschiedenen Faktoren ab, insbesondere jedoch von der Viskosität der beiden Reaktionsgemische im Augenblick ihres Aufbringens auf die Folie. Eine Optimierung läßt sich am besten durch Versuche ermitteln.

Es hat sich gezeigt, daß in den meisten Fällen gute Ergebnisse erzielt werden, wenn ein Flächengebilde verwendet wird, welches mindestens 10.000 Löcher pro m² bei einer maximalen Lochgröße von 80 mm² und maximal 160.000 Löcher pro m² bei einer minimalen Lochgröße von 3 mm² aufweist.

Vorzugsweise ist das Flächengebilde an im Formhohlraum angeordneten, den Sitzspiegel begrenzenden Stegen befestigt.

Diese Durchführungsform ist natürlich nur bei einem entsprechend gestalteten Formwerkzeug möglich. Bei Fahrzeugsitzpolstern ist so in vorteilhafter Weise im Bereich des Sitzspiegels die Anordnung zweier Zonen von Schaumstoff unterschiedlicher Härte übereinander möglich. Dies kommt sowohl dem Sitzkomfort als auch der Sicherheit des Fahrers zugute.

Gemäß einer weiteren besonderen Durchführungsform des Verfahrens wird das zweite Reaktionsgemisch auf das Flächengebilde erst aufgebracht, nachdem die Löcher vom aufschäumenden ersten Reaktionsgemisch bereits weitgehend verschlossen sind.

Dies kann dadurch geschehen, daß das durch die Löcher des Flächengebildes hindurchgeflossene Reaktionsgemisch bereits so weit aufgeschäumt ist, daß es die Löcher von unten abdichtet. Es genügt aber auch, wenn der auf der Folie verbleibende Gemischfilm des ersten Reaktionsgemisches zwischenzeitlich einen solchen Ancremungsgrad erreicht hat, daß die Löcher dadurch im wesentlichen verschlossen sind. Jedenfalls sollte das zweite Reaktionsgemisch aufgebracht werden, solange das aufgeschäumte, erste noch genügend klebrig ist, damit eine gute Verbindung mit möglichst homogenem Übergang in der Struktur erfolgt.

In besonders vorteilhafter Weise wird ein Flächengebilde verwendet, welches neben den Löchern noch eine Perforation besitzt, welche für die Reaktionsgemische undurchlässig ist.

Diese Perforation trägt dazu bei, daß das Flächengebilde das Sitzklima verbessert, da es nicht als Sperre für Wärme und Feuchtigkeit wirkt. Oft werden Drähte auf die Stege aufgelegt, welche als Befestigungspunkte bei der späteren Verpolsterung dienen. Es ist möglich, die perforierte Kunststoff-Folie ebenfalls an diesen Drähten zu befestigen.

Es versteht sich, daß das neue Verfahren auch für die Herstellung von Polstern mit hinterschäumten Bezügen anwendbar ist.

In der Zeichnung ist dargestellt in:
- Fig. 1: die untere Formwerkzeughälfte eines geöffneten Formwerkzeuges in räumlicher Darstellung und im Schnitt zur Herstellung des neuen Polsters mit eingelegtem Flächengebilde und
- Fig. 2: ein Schnitt durch ein nach dem neuen Verfahren unter Verwendung des in Fig. 1 dargestellten Formwerkzeuges hergestelltes Polster.

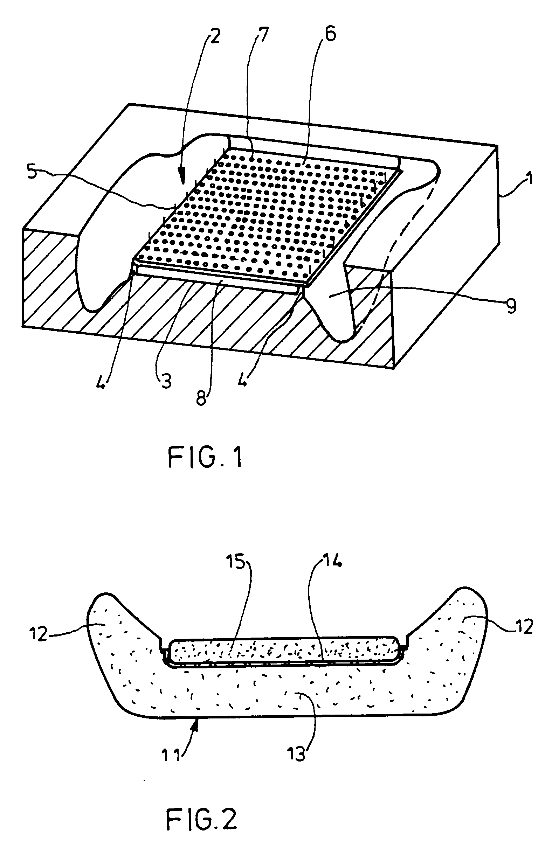

In Fig. 1 weist die untere Formwerkzeughälfte 1 einen Formhohlraum 2 auf, aus dessen Boden 3 Stege 4 herausragen. Diese Stege 4 sind mit mehreren dünnen Nadeln 5 versehen, durch welche ein Flächengebilde 6 aus Kunststoff-Folie fixiert ist. Diese Kunststoff-Folie 6 ist mit Löchern 7 mit einer Querschnittsfläche von 15 mm² versehen, und zwar in einer Anzahl von 40 000 pro m². Die Oberflächen der Kunststoff-Folie 6 sind angerauht. Außerdem ist die Kunststoff-Folie 6 zusätzlich mit einer nicht dargestellten Perforation versehen, welche für die Reaktionsgemische undurchlässg ist. Zwischen den Stegen 4 befindet sich der Sitzspiegelraum 8, zu beiden Seiten davon die Wangenbereiche 9 für das herzustellende Fahrzeugsitzpolster.

In Fig. 2 besteht das Fahrzeugsitzpolster aus einer Zone 11 härteren Schaumstoffes, ielche die Wangen 12 sowie den mittleren unteren Bereich 13 umfaßt. Über dem Bereich 13 befindet sich, getrennt durch das gelochte Flächengebilde 14, eine den Sitzspiegelraum bildende Zone 15 weicheren Schaumstoffes.

## Patentansprüche

1. Verfahren zum Herstellen von Schaumstoffpolstern, insbesondere Polyurethanschaumstoffpolstern, mit Zonen (12, 15) unterschiedlicher Härte durch Formverschäumung, indem mindestens zwei Schaumstoffe unterschiedlicher Härte bildende, fließfähige Reaktionsgemische nacheinander in den Formhohlraum (2) eingebracht werden, wobei das zweite Reaktionsgemisch beim Einbringen bereits angecremt ist und das Schaumstoffpolster nach dem Aushärten entformt wird, dadurch gekennzeichnet, daß vor dem Einbringen der Reaktionsgemische über einen vertieften Raum (8) des Formhohlraumes (2) ein mit Löchern (7) versehenes Flächengebilde (6, 14) gespannt wird und auf dieses Flächengebilde (6, 14) das erste Reaktionsgemisch in einem noch so dünnflüssigen Zustand aufgegeben wird, daß es durch die Löcher (7) hindurch in den darunter befindlichen Raum (8) fließt und dort aufschäumt, und daß das zweite Reaktionsgemisch in einem so weit angecremten Zustand in den oberhalb und seitlich des Flächengebildes (6, 14) verbliebenen Formhohlraum (2) eingefüllt wird, daß es durch die Löcher (7) des Flächengebildes (6, 14) nicht mehr hindurchtritt.

2. Verfahren nach Anspruch 1, dadurch gekennzeichnet, daß ein Flächengebilde (6, 14) verwendet wird, welches mindestens 10.000 Löcher (7) pro m² bei einer maximalen Lochgröße von 80 mm² und maximal 160.000 Löcher (7) pro m² bei einer minimalen Lochgröße von 3 mm² aufweist.

3. Verfahren nach Anspruch 1 oder 2, dadurch gekennzeichnet, daß das Flächengebilde (6, 14) an im Formhohlraum (2) angeordneten, den Sitzspiegelraum (8) begrenzenden Stegen (4) befestigt wird.

4. Verfahren nach einem der Ansprüche 1 bis 3, dadurch gekennzeichnet, daß das zweite Reaktionsgemisch erst mit dem Flächengebilde (6, 14) in Berührung gebracht wird, nachdem die Löcher (7) vom aufschäumenden, ersten Reaktionsgemisch bereits weitgehend verschlossen sind.

5. Verfahren nach einem der Ansprüche 1 bis 4, dadurch gekennzeichnet, daß ein Flächengebilde (6, 14) verwendet wird, welches eine zusätzliche Perforation aufweist, welche für die Reaktionsgemische undurchlässig ist.

## Claims

1. A process for the production of foam upholstery, in particular polyurethane foam upholstery, with zones (12, 15) of different hardness by foam moulding, by successively introducing at least two flowable reaction mixtures, forming foamed plastics of different hardness, into the mould cavity (2), wherein the second reaction mixture is already initially creamed at the time of introduction and the foam upholstery is removed from the mould after curing, characterized in that before the introduction of the reaction mixtures a fabric (6, 14) provided with holes (7) is stretched over a recessed space (8) of the mould cavity (2) and the first reaction mixture is fed onto this fabric (6, 14) in a state still so free-flowing that it flows through the holes (7) into the space (8) located underneath and there foams up and that the second reaction mixture is fed to the remaining mould cavity (2) above and to the side of the fabric (6, 14) in a state in which creaming has proceeded so far that it no longer passes through the holes (7) in the fabric (6, 14).

2. A process according to Claim 1, characterized in that a fabric (6, 14) is used that has at least 10,000 holes (7) per m² at a maximum hole size of 80 mm² and no more than 160,000 holes (7) per m² at a minimum hole size of 3 mm².

3. A process according to Claim 1 or 2, characterized in that the fabric (6, 14) is fastened to crosspieces (4), disposed in the mould cavity (2) and bounding the sitting surface space (8).

4. A process according to one of Claims 1 to 3, characterized in that the second reaction mixture is not contacted with the fabric (6, 14) until the holes (7) are already largely closed by the foaming first reaction mixture.

5. A process according to one of Claims 1 to 4, characterized in that a fabric (6, 14) is used that has an additional perforation that is impermeable to the reaction mixtures.

## Revendications

1. Procédé pour la fabrication de coussins de mousse, en particulier de coussins de mousse de polyuréthanne, à zones (12, 15) à duretés différentes par gonflement en moule, dans lequel on introduit dans la cavité du moule (2), successivement, au moins deux mélanges de réaction fluides formant deux mousses de duretés différentes, le deuxième mélange de réaction étant déjà crémé à l'introduction et le coussin de mousse étant démoulé après durcissement, ce procédé se caractérisant en ce que, avant l'introduction des mélanges de réaction, on tend un article planiforme (6, 14) à orifices (7) sur un espace évidé (8) de la cavité du moule (2) et on envoie sur cet article planiforme (6, 14) le premier mélange de réaction dans un état encore suffisamment fluide pour qu'il s'écoule, au travers des orifices (7) dans l'espace (8) placé au-dessous et y gonfle en mousse, après quoi on introduit le deuxième mélange de réaction dans la partie restante de la cavité du moule (2), au-dessus et sur les côtés de l'article planiforme (6, 14) dans un état suffisamment crémé pour qu'il ne puisse plus traverser les orifices (7) de l'article planiforme (6, 14).

2. Procédé selon la revendication 1, caractérisé en ce que l'on utilise un article planiforme (6, 14) à au moins 10 000 orifices (7) par m², avec une dimension maximale d'orifices de 80 mm², et au maximum 160 000 orifices (7) par m², avec une dimension minimal d'orifices de 3 mm².

3. Procédé selon la revendication 1 ou 2, caractérisé en ce que l'article planiforme (6, 14) est fixé sur des traverses (4) disposées dans la cavité du moule (2) et limitant l'espace de l'assiette du siège (8).

4. Procédé selon l'une des revendications 1 à 3, caractérisé en ce que l'on ne met le deuxième mélange de réaction en contact avec l'article planiforme (6, 14) qu'après que le premier mélange de réaction gonflé en mousse ait déjà pratiquement obturé les orifices (7).

5. Procédé selon l'une des revendications 1 à 4, caractérisé en ce que l'on utilise un article planiforme (6, 14) comportant une autre perforation que les mélanges de réaction ne peuvent pas traverser.
